# EUROPEAN PATENT APPLICATION

(11) **EP 4 432 606 A1**
(43) Date of publication of application: **18.09.2024**
(21) Application number: 24161707.5
(22) Date of filing: 06.03.2024
(51) Int. Cl.: H04L 9/40, G06F 21/55, H04W 12/128

(54) **ACCESSIBILITY SERVICES BASED PHISHING DETECTION AND PREVENTION**

(30) Priority: 16.03.2023 US 202318185136
(71) Applicant: CrowdStrike, Inc., Irvine, CA 94086 (US)
(72) Inventor: CIRLAG, Gabriel, Sunnyvale, 94086 (US); ZAVISLAK, Matthew, San Francisco, 94086 (US); ARON, Robert, Sunnyvale, 94086 (US)
(74) Representative: Murgitroyd & Company

(57) **Abstract**

Systems and methods disclosed that receive, from an accessibility service executing on a computing device, screen content that is displayed on a screen of the computing device to a user. The accessibility service is configured to interact with a graphical user interface executing on the computing device to determine the screen content and determine that the screen content includes malicious content. The systems and methods perform an operation, by the computing device, that impedes the user from selecting the malicious content.

## Description

### TECHNICAL FIELD

Aspects of the present disclosure relate to phishing detection, and more particularly, to impeding a user from accessing malicious content on a computing device.

### BACKGROUND

Phishing attacks involve misleading users into revealing sensitive information or downloading malware through deceptive messages or websites, often disguised as legitimate sources. These attacks may be carried out through SMS messages, email, social media, etc. Common phishing attack approaches include inviting users to download and install infected software, advising users to act quickly, offering enticing rewards or threats, and using fake login pages to steal usernames and passwords.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
Figure 1 is a block diagram that illustrates an example system that detects malicious content and impedes a user from selecting the malicious content at a computing device, according to some embodiments of the present disclosure.
Figure 2 is a block diagram that illustrates an example system that uses an overlay window to impede a user from selecting malicious content, according to some embodiments of the present disclosure.
Figure 3 is a block diagram that illustrates an example system that uses features of a virtual private network (VPN) to block malicious content selection, according to some embodiments of the present disclosure.
Figure 4 is a table illustrating some embodiments of the present disclosure to impede a user from selecting malicious content.
Figure 5 is a flow diagram of a method for detecting malicious content on a computing device and impeding selection of the malicious content, according to some embodiments of the present disclosure.
Figure 6 is a block diagram of an example computing device that may perform one or more of the operations described herein, in accordance with some embodiments of the present disclosure.

### DETAILED DESCRIPTION

As discussed above, phishing attacks involve misleading users into revealing sensitive information or downloading malware through deceptive messages or websites, often disguised as legitimate sources. Conventional approaches to combat phishing attacks, such as antivirus software, firewalls, and web filters, attempt to prevent mobile users from being subject to phishing attacks through techniques such as Uniform Resource Locator (URL) filtering, reputation-based filtering, and email and SMS filtering. URL filtering involves blocking access to known malicious or suspicious URLs, as well as restricting access to certain categories of websites. Reputation-based filtering uses a reputation database to identify and block known malicious websites or links. Email and SMS filtering analyzes the content of email and SMS messages to identify and block phishing attempts. Challenges with conventional approaches, however, still allow a user to select the malicious content link and then determine whether the selection is malicious. As such, conventional approaches may unintentionally enable a phishing attack merely through a user selection subject to, for example, timing out before thoroughly analyzing the user selection.

In addition, in some systems, a main attack vector for malicious payloads on computing devices includes messages on various platforms that invite users to download and install infected software, such as Android package kits (APKs). To prevent these attacks, conventional systems would require integration with SMS messengers, mail platforms, and third-party messaging platforms. Furthermore, any other platform that includes hyperlinks could expose these vulnerabilities as well, such as browsers, notes applications, or social media platforms, thereby making detection and prevention difficult for conventional systems due to the large attack surface.

Some conventional systems perform detection and prevention using virtual private networks (VPNs). While VPN solutions may be reliable, VPN solutions restrict the user to using the actual VPN. In addition, the VPN solution typically performs detection and prevention at the server-side of the VPN, and time is wasted for the user selection on the computing device to reach the server. This causes the server to timeout before completing prevention and detection and allowing the user selection to proceed.

The present disclosure addresses the above-noted and other deficiencies by performing malicious content detection and impeding a user from selecting the malicious content on a computing device, such as on a mobile device. In turn, the present disclosure improves the operation of a computing device by increasing the speed at which malicious content is detected and actions performed to impede the user from selecting malicious content. In addition, the present disclosure improves the technological area of phishing detection and prevention by removing restrictions of VPN-based systems, such as timeout restrictions and usage requirements, through early analysis, detection, and prevention at the computing device.

The present disclosure discusses an approach that receives, from an accessibility service executing on a computing device, screen content that is displayed on a screen of the computing device to a user. The accessibility service is configured to interact with a graphical user interface executing on the computing device to determine that the screen content includes malicious content. In turn, the present disclosure performs an operation that impedes the user from selecting the malicious content.

In some embodiments, the approach displays, on the screen, an overlay window over the malicious content that informs the user of the malicious content. In some embodiments, the approach also prevents the user from selecting the malicious content. In some embodiments, the approach enables the user to select the content determined to be malicious in situations of false-positive results. In some embodiments, the approach displays the overlay window over a portion of the screen that includes the malicious content, and allows the user to select non-malicious screen content on another portion of the screen. In some embodiments, the computing device is connected to a virtual private network (VPN), and instructs the VPN to block a network connection corresponding to the malicious content.

In some embodiments, the approach contacts a cloud service, such as a domain reputation service or other cloud phishing detection service, to analyze the screen content. The approach then receives an indication that the screen content includes the malicious content and performs an operation accordingly. In some embodiments, the approach detects that the screen content includes a hyperlink. The approach performs a query using the hyperlink, and determines that the screen content is malicious based on the query result.

In some embodiments, the approach identifies a malicious application executing on the computing device that initiated the malicious content to be displayed on the screen. The approach then uninstalls, or prompts a user to uninstall, the malicious application from the computing device. In some embodiments, the accessibility service is an accessibility application programming interface (API), an assistant API, or a combination thereof.

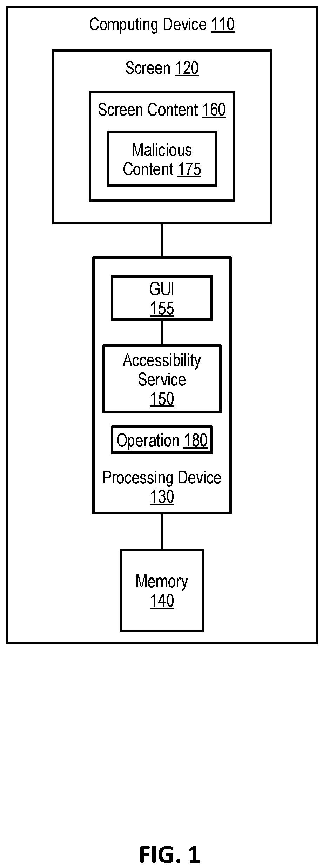

Figure 1 is a block diagram that illustrates an example system that detects malicious content and impedes a user from selecting the malicious content at a computing device, according to some embodiments of the present disclosure. Computing device 110 includes screen 120, processing device 130, and memory 140. Processing device 130 executes graphical user interface 155 and accessibility service 150.

Accessibility service 150 is a software feature on computing devices (such as smartphones and tablets) that typically assists users to use their device more effectively. Accessibility services on computing devices often include features such as text-to-speech, screen readers, magnification, high contrast display modes, and voice commands. Accessibility services are typically built into the operating system of the device and can be turned on or off by the user.

Accessibility service 150 may use an accessibility API or an assistant API. Both APIs enable software developers to make their applications more accessible to users by providing a way for assistive technologies to access and interact with their application's user interface elements, such as buttons, menus, and text fields, and other content. For example, accessibility APIs can help a screen reader to read out the contents of a web page or allow a keyboard user to navigate through a web page using only the keyboard. There is a tradeoff between the Accessibility API and the Assistant API in terms of privacy. The Assistant API requires the user to initiate the analysis/scan (e.g., holding down a "Home" button) and thus is more privacy-friendly due to this opt-in nature. The Accessibility API does not require the user to initiate a scan and thus is more secure but less privacy friendly.

Accessibility service 150 receives screen content 160 from GUI 155. For example, accessibility service 150 may initiate a screen scraping function, which captures text, images, metadata, or a combination thereof displayed on screen 120. Screen scraping is a technique that is used to extract information, such as text and metadata, from a user interface of an application even if the information is not otherwise available through the application's public API.

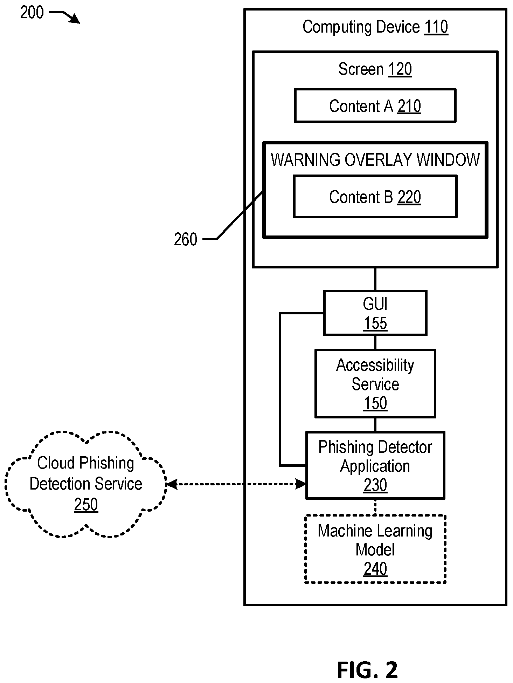

Processing device 130 analyzes screen content and determines that screen content 160 includes malicious content 175. In some embodiments, processing device 130 determines malicious content 175 using information stored locally (e.g., list of malicious URLs), using a machine learning model, using a cloud phishing detection service, or a combination thereof (see Figure 2 and corresponding text for further details).

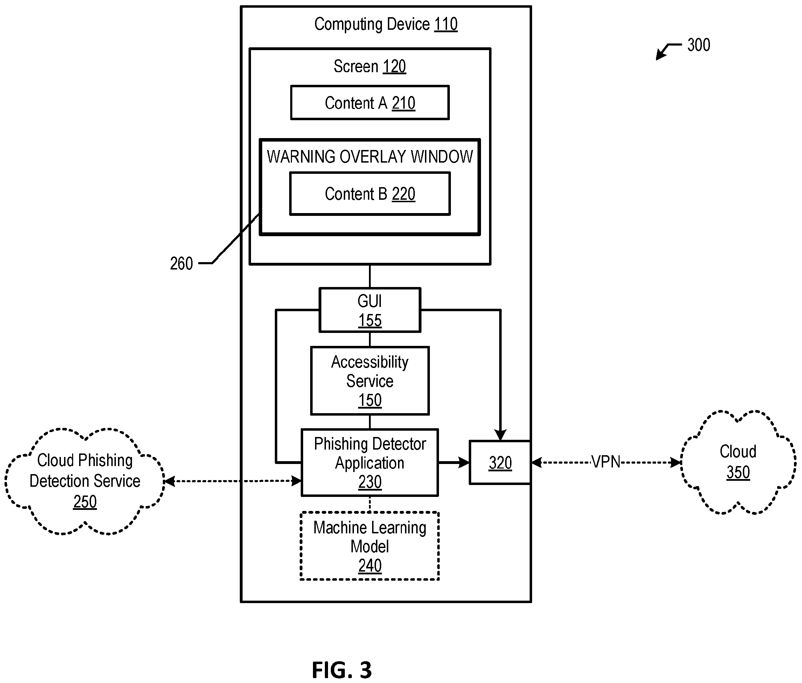

In response to processing device 130 determining malicious content 175, processing device 130 performs operation 180. In some embodiments, operation 180 displays an overlay screen on top of malicious content 175 to inform the user of the malicious content 175 (see Figures 2-4 and corresponding text for further details). In some embodiments, operation 180 displays the overlay screen on top of malicious content 175 and also prevents the user from selecting malicious content 175. In some embodiments, when computing device 110 is connected to a virtual private network, operation 180 uses VPN blocking properties to block the user selection (see Figures 3-4 and corresponding text for further details).

Figure 2 is a block diagram that illustrates an example system that uses an overlay window to impede a user from selecting malicious content, according to some embodiments of the present disclosure.

Phishing detector application 230 receives text and metadata from accessibility service 150. In some embodiments, phishing detector application 230 uses machine learning model 240 to determine whether any content displayed on screen 120 is malicious. In some embodiments, machine learning model 240 is local to computing device 110. In some embodiments, machine learning model 240 executes at a remote location relative to computing device 110.

To prepare machine learning model 240 to analyze text and metadata to determine whether the text or metadata includes malicious content, machine learning model 240 is trained. In some embodiments, the training process includes collecting a labeled dataset, which includes examples of both malicious and non-malicious text. In some embodiments, the training process includes preprocessing the text, which involves removing stop words, stemming or lemmatizing the text, and converting the text to a numerical representation. After preprocessing the text data, the training process involves extracting features that can be used as inputs to machine learning model 240. The features may include word frequency, n-grams, or more advanced features such as semantic embeddings. With the preprocessed and feature-extracted data, machine learning model 240 may now be trained, for instance, using a supervised learning approach. Commonly used models for text classification include Naive Bayes, Support Vector Machines (SVM), and neural networks. Once machine learning model 240 is trained, the performance of machine learning may be evaluated on a separate test dataset. Common evaluation metrics for text classification include accuracy, precision, recall, and F1-score.

In some embodiments, phishing detector application 230 uses cloud phishing detection service 250 to determine whether content on screen 120 is malicious. In some embodiments, cloud phishing detection service 250 is a domain reputation service that provides a regularly updated list of known malicious fully qualified domain names. For example, phishing detector application 230 may detect a hyperlink in the screen contents and send a query to cloud phishing detection service 250. In response, cloud phishing detection service 250 sends an indication back to phishing detector application 230 as to whether the hyperlink is malicious.

When phishing detector application 230 determines malicious content on screen 120, phishing detector application 230 may interact with GUI 155 to display warning overlay window 260 over the content deemed to be malicious. The example in Figure 2 shows that screen 120 includes content A 310 and content B 220. In this example, phishing detector application 230 determines that content B 220 includes the malicious content. As such, in some embodiments, warning overlay window 260 is positioned over content B 220, which allows the user to still select content A 210.

Figure 3 is a block diagram that illustrates an example system that uses features of a virtual private network (VPN) to block malicious content selection, according to some embodiments of the present disclosure.

Computing device 110 includes VPN application 320, which establishes a secure and encrypted connection to a VPN endpoint in cloud 350. A VPN endpoint, also known as a VPN gateway or a VPN concentrator, is a device or software application that serves as the entry and exit point for a virtual private network (VPN) connection to cloud 350. When VPN application 320 initiates a VPN connection to the VPN endpoint, the VPN endpoint first authenticates and verifies the identity of computing device 110 and then establishes a secure tunnel for data transmission.

In some embodiments, VPN application 320 includes capabilities to block access to certain websites or domains, which may be referred to as a "kill switch." A kill switch is a feature that automatically blocks internet access, blocks specific domains or websites, or a combination thereof, which can help to impede access to certain content that may be restricted or harmful.

In some embodiments, when phishing detector application 230 detects malicious content on screen 120, phishing detector application 230 sends a message to VPN application 320 to block a user selection pertaining to the malicious content. For example, if content B 220 includes a URL determined to be malicious, phishing detector application 230 sends the URL to VPN application 320 and instructs VPN application 320 to block any user selection of the URL.

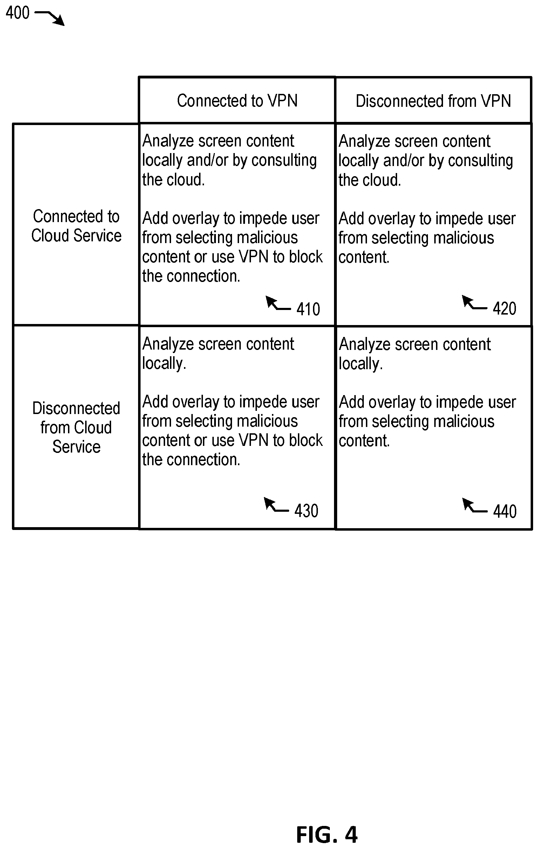

In some embodiments, phishing detector application 230 uses warning overlay window 260, VPN application 320, or a combination thereof to impede a user from accessing malicious content (see Figure 4 and corresponding text for further details).

Figure 4 is a table illustrating some embodiments of the present disclosure to impede a user from selecting malicious content. Table 400 shows when computing device 110 is connected to a VPN and connected to a cloud phishing detection service (410); when computing device 110 is disconnected from a VPN and connected to a cloud phishing detection service (420); when computing device 110 is connected to a VPN and disconnected from a cloud phishing detection service (430); and when computing device 110 is disconnected from a VPN and disconnected from a cloud phishing detection service (440). In addition, the discussion below includes embodiments when accessibility service 150 uses an accessibility API, and when accessibility service 150 uses an assistant API.

In some examples, when computing device 110 is connected to a VPN and connected to cloud phishing detection service 250 (410), and when accessibility service 150 uses an accessibility API, accessibility service 150 automatically provides screen content to phishing detector application 230. Phishing detector application 230 analyzes the screen content locally, by consulting the cloud phishing detection service 250, or a combination thereof, to determine whether a connection is malicious. Phishing detector application 230 then adds an overlay window on screen 120 over the malicious content to impede the user from selecting the malicious content, uses VPN application 320 capability to block the network connection, or a combination thereof. In some embodiments, when accessibility service 150 uses an assistant API, after the user initiates phishing detector application 230 (e.g., holding down the home button), phishing detector application 230 invokes accessibility service 150 to provide the screen content. Phishing detector application 230 analyzes the screen content locally, by consulting the cloud phishing detection service 250, or a combination thereof, to determine whether a connection is malicious. Phishing detector application 230 then adds an overlay window on screen 120 over the malicious content to impede the user from selecting the malicious content, uses VPN application 320 capability to block the network connection, or a combination thereof.

In some examples, when computing device 110 is disconnected from a VPN, is connected to cloud phishing detection service 250 (420), and when accessibility service 150 uses an accessibility API, accessibility service 150 automatically provides screen content to phishing detector application 230. Phishing detector application 230 analyzes the screen content locally, by consulting the cloud phishing detection service 250, or a combination thereof, to determine whether a connection is malicious. Phishing detector application then adds an overlay window on screen 120 over the malicious content to impede the user from selecting the malicious content. When accessibility service 150 is an assistant API, after the user initiates phishing detector application 230 (e.g., holding down the home button), phishing detector application 230 invokes accessibility service 150 to provide the screen content. Phishing detector application 230 analyzes the screen content locally, by consulting the cloud phishing detection service 250, or a combination thereof, to determine whether a connection is malicious. Phishing detector application then adds an overlay window on screen 120 over the malicious content to impede the user from selecting the malicious content.

In some examples, when computing device 110 is connected to a VPN, is disconnected from cloud phishing detection service 250 (430), and when accessibility service 150 uses an accessibility API, accessibility service 150 automatically provides screen content to phishing detector application 230. Phishing detector application 230 analyzes the screen content locally to determine whether a connection is malicious. Phishing detector application 230 then adds an overlay window on screen 120 over the malicious content to impede the user from selecting the malicious content, uses VPN application 320 capability to block the network connection, or a combination thereof. When accessibility service 150 uses an assistant API, after the user initiates phishing detector application 230 (e.g., holding down the home button), phishing detector application 230 invokes accessibility service 150 to provide the screen content. Phishing detector application 230 analyzes the screen content locally to determine whether a connection is malicious. Phishing detector application 230 then adds an overlay window on screen 120 over the malicious content to impede the user from selecting the malicious content, uses VPN application 320 capability to block the network connection, or a combination thereof.

In some examples, when computing device 110 is disconnected from a VPN, is disconnected from cloud phishing detection service 250 (430), and when accessibility service 150 uses an accessibility API, accessibility service 150 automatically provides screen content to phishing detector application 230. Phishing detector application 230 analyzes the screen content locally to determine whether a connection is malicious. Phishing detector application 230 then adds an overlay window on screen 120 over the malicious content to impede the user from selecting the malicious content. When accessibility service 150 is an assistant API, after the user initiates phishing detector application 230 (e.g., holding down the home button), phishing detector application 230 invokes accessibility service 150 to provide the screen content. Phishing detector application 230 analyzes the screen content locally to determine whether a connection is malicious. Phishing detector application 230 then adds an overlay window on screen 120 over the malicious content to impede the user from selecting the malicious content.

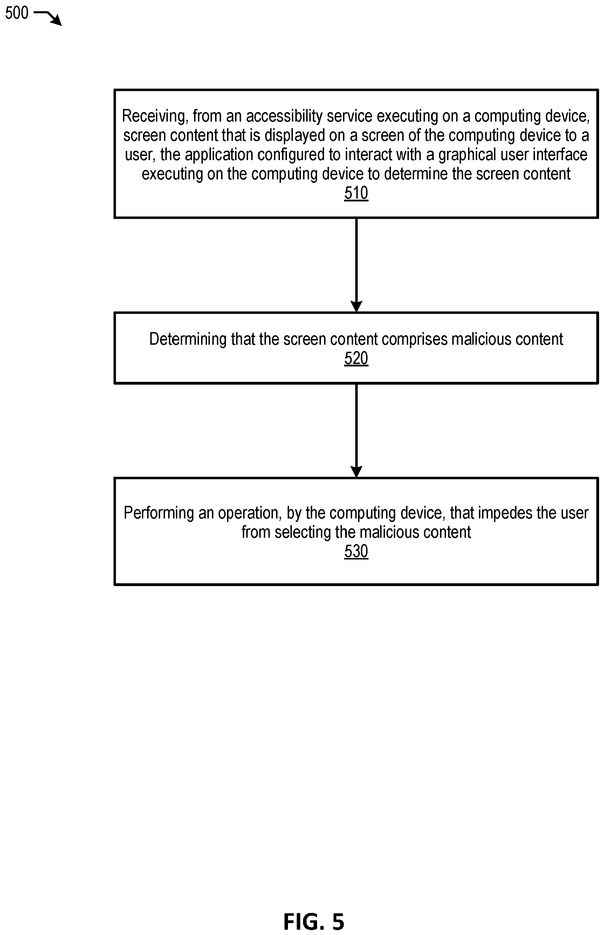

Figure 5 is a flow diagram of a method 500 for detecting malicious content on a computing device and impeding selection of the malicious content, according to some embodiments of the present disclosure. Method 500 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 500 may be performed by processing device 115 shown in Figure 1.

With reference to Figure 5, method 500 illustrates example functions used by various embodiments. Although specific function blocks ("blocks") are disclosed in method 500, such blocks are examples. That is, embodiments are well suited to performing various other blocks or variations of the blocks recited in method 500. It is appreciated that the blocks in method 500 may be performed in an order different than presented, and that not all the blocks in method 500 may be performed.

With reference to Figures 5, method 500 begins at block 510, where processing logic receives, from an accessibility service executing on a computing device, screen content that is displayed on a screen of the computing device to a user. The accessibility service is configured to interact with a graphical user interface executing on the computing device to determine the screen content prior to interaction with the screen content by the user.

At block 520, processing logic determines that the screen content includes malicious content. In some embodiments, to determine whether the screen content is malicious, processing logic uses information locally, uses a cloud phishing detection service, or a combination thereof.

At block 530, processing logic performs an operation, by the computing device, that impedes the user from selecting the malicious content. In some embodiments, processing logic performs an operation that prevents the user from selecting the malicious content, such as locking out a portion of the screen. In some embodiments, the operation includes adding an overlay window over the malicious content, using a VPN to block the user selection, or a combination thereof.

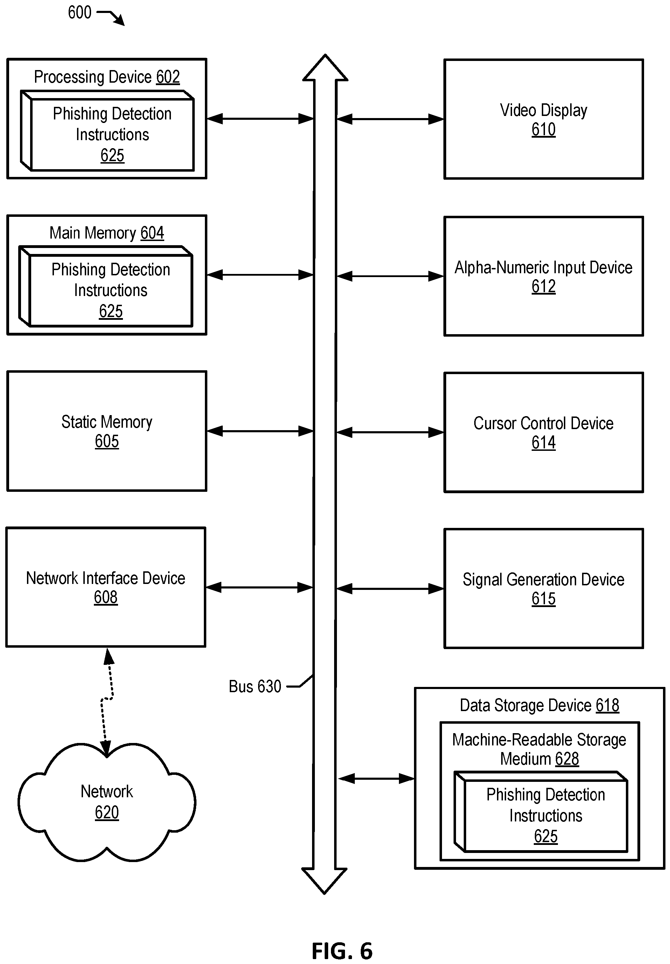

Figure 6 is a block diagram of an example computing device that may perform one or more of the operations described herein, in accordance with some embodiments of the present disclosure.

In some embodiments, computer system 600 is an example of computing device 110 shown in Figure 1. In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 600 may be representative of a server.

The exemplary computer system 600 includes a processing device 602, a main memory 604 (e.g., read-only memory (ROM), flash memory, dynamic random-access memory (DRAM), a static memory 606 (e.g., flash memory, static random-access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computing device 600 may further include a network interface device 608 which may communicate with a network 620. The computing device 600 also may include a video display unit 610 (*e.g.,* a liquid crystal display (LCD) or a cathode ray tube (CRT)), an alphanumeric input device 612 (*e.g.,* a keyboard), a cursor control device 614 (*e.g.,* a mouse) and an acoustic signal generation device 616 (*e.g.,* a speaker). In some embodiments, video display unit 610, alphanumeric input device 612, and cursor control device 614 may be combined into a single component or device (*e.g.,* an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute phishing detection instructions 625, for performing the operations and steps discussed herein to detect malicious content and impede a user from selecting the malicious content

The data storage device 618 may include a machine-readable storage medium 628, on which is stored one or more sets of phishing detection instructions 625 (e.g., software) embodying any one or more of the methodologies of functions described herein. The phishing detection instructions 625 may also reside, completely or at least partially, within the main memory 604 or within the processing device 602 during execution thereof by the computer system 600; the main memory 604 and the processing device 602 also constituting machine-readable storage media. The phishing detection instructions 625 may further be transmitted or received over a network 620 via the network interface device 608.

The machine-readable storage medium 628 may also be used to store instructions to perform a method for performing malicious content detection on a computing device, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "receiving," "routing," "updating," "providing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times, or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope of the appended claims.

## Claims

1. A method comprising:
receiving, from an accessibility service executing on a computing device, screen content that is displayed on a screen of the computing device to a user, the accessibility service configured to interact with a graphical user interface executing on the computing device to determine the screen content;
determining, by a processing device of the computing device, that the screen content comprises malicious content; and
performing an operation, by the computing device, that impedes the user from selecting the malicious content.

2. The method of claim 1, wherein the operation further comprises:
displaying an overlay window on the screen and over the malicious content that informs the user of the malicious content.

3. The method of claim 2, wherein the operation further comprises:
preventing the user from selecting the malicious content.

4. The method of claim 3, wherein the screen content comprises first screen content and second screen content, the method further comprising:
determining that the first screen content comprises the malicious content;
determining that the second screen content comprises non-malicious content; and
responsive to determining that the second screen content comprises the non-malicious content, displaying the overlay window over the first screen content and allowing the user to select the second screen content.

5. The method of any preceding claim, wherein the determining further comprises:
contacting a cloud service to analyze the screen content; and
receiving, from the cloud service, an indication that the screen content comprises the malicious content.

6. The method of any preceding claim, wherein the determining further comprises:
detecting that the screen content comprises a hyperlink;
performing a query using the hyperlink; and
determining that the screen content comprises the malicious content based on a query result of the query.

7. The method of any preceding claim, wherein the computing device is coupled to a virtual private network, VPN, and wherein the operation further comprises:
instructing the VPN to block a network connection corresponding to the malicious content.

8. The method of any preceding claim, wherein the operation further comprises:
identifying a malicious application executing on the computing device that initiated the malicious content to be displayed on the screen; and
uninstalling the malicious application from the computing device.

9. A system comprising:
a processing device; and
a memory to store instructions that, when executed by the processing device, cause the processing device to carry out the method of any preceding claim.

10. A computer program which, when executed by a processing device, causes the processing device to carry out the method of any one of claims 1 to 8.
